# EUROPÄISCHE PATENTSCHRIFT

(11) **EP 2 037 140 B1**
(45) Veröffentlichungstag und Bekanntmachung des Hinweises auf die Patenterteilung: **18.05.2011**
(21) Anmeldenummer: 08015593.0
(22) Anmeldetag: 04.09.2008
(51) Int. Cl.: F16C 33/12, F16C 33/14

(54) **Gleitelement und Verfahren zu seiner Herstellung**
Sliding element and method for its production
Elément coulissant et son procédé de fabrication

(30) Priorität: 14.09.2007 DE 102007043941
(43) Veröffentlichungstag der Anmeldung: 18.03.2009
(73) Patentinhaber: Zollern BHW Gleitlager GmbH & CO. KG, 38124 Braunschweig (DE)
(72) Erfinder: Jahn, Peter, 38124 Braunschweig (DE); di Guida, Angelo, 38122 Braunschweig (DE)
(74) Vertreter: Lins, Edgar

(56) Entgegenhaltungen:
- DE-A1- 2 713 196
- DE-U1- 8 206 353

## Beschreibung

Die Erfindung betrifft ein Gleitelement mit einer formgebenden Trägerschicht und einer galvanisch darauf angebrachten Gleitschicht, die aus einer Legierung mit den Legierungsbestandteilen Zinn, Antimon und Kupfer gebildet ist, deren Anteile in Gew.-% betragen
Antimon 5 bis 20 %,
Kupfer 0,5 bis 20 %,
Rest Zinn,
wobei der Gehalt an Blei < 0,7 % und der Gesamtgehalt sonstiger Anteile < 0,5 % beträgt.

Die Erfindung betrifft ferner ein Verfahren zur Herstellung eines Gleitelements durch elektrolytisches Aufbringen einer Gleitschicht aus einer Legierung mit den Legierungsbestandteilen Zinn, Antimon und Kupfer auf eine formgebende Trägerschicht.

Eine Gleitlagerschicht der eingangs erwähnten Art ist beispielsweise durch DE 82 06 353 U1 bekannt. Die Gleitlagerschicht wird dabei galvanisch auf eine Trägerschicht aufgebracht, die sich auf einer Stahlstützschale befindet. Die Gleitlagerschicht weist dabei eine Dicke von etwa 20 µm auf. Angestrebt wird ferner, dass der Kupfergehalt der Gleitlagerschicht unter 0,5 Gew.-% liegt, weil ein höherer Kupfergehalt gemäß der Entgegenhaltung einen schädlichen Einfluss auf die Dauerfestigkeit der Gleitlagerschicht hat.

In der Praxis ist die bekannte Gleitlagerschicht unter Verwendung eines Netzmittels galvanisch hergestellt, das unter der Bezeichnung Igepal CO 880 von Rhodia Novecare vertrieben wird und ein Nonylphenolethoxylat mit 30 Ethoxy (EO) Einheiten ist. Der elektrolytische Schichtaufbau erfolgt mit einer kolumnaren Kristallisation und ermöglicht keine brauchbaren Schichten, die wesentlich größer als 20 µm sind. Dadurch ist die Standzeit der Gleitlagerschichten wegen des unvermeidlichen Abriebs naturgemäß eng begrenzt.

Der vorliegenden Erfindung liegt die Problemstellung zugrunde, eine Gleitlagerschicht mit verbesserten Gebrauchseigenschaften bereitzustellen.

Diese Aufgabe wird erfindungsgemäß bei einem Gleitlager der eingangs erwähnten Art dadurch gelöst, dass in der Gleitlagerschicht die Zinn-Kristalle überwiegend globular geformt sind.

Zur Lösung des erwähnten Problems ist erfindungsgemäß ferner ein Verfahren der eingangs erwähnten Art gekennzeichnet durch die Verwendung eines Elektrolyten auf der Basis von Fluoroborsäure und Metallfluoroboraten in wässriger Lösung, der folgende Inhaltsstoffe aufweist:
Sn²⁺ 15 bis 80 g/l
Sb³⁺ 0,5 bis 20 g/l
Cu²⁺ 0,05 bis 10 g/l
HBF₄ 20 bis 200 g/l
Netzmittel 0,05 bis 5 g/l
sowie etwaige Hilfsstoffe, die nicht in die herzustellende Gleitelementschicht eingehen, wobei mit wenigstens einem Hilfsstoff aufgrund seiner Molekülgröße die Wanderungsgeschwindigkeit der Ionen der die Gleitschicht bildenden Elemente so gesteuert wird, dass überwiegend globular geformte Zinn-Kristalle entstehen.

Es hat sich gezeigt, dass durch die Herstellung der Gleitschicht derart, dass der überwiegende Teil der Zinn-Kristalle (> 50 %) ein globulares Gefüge aufweist - und nicht ein nadel- oder säulenförmiges Gefüge wie bisher - eine außerordentlich gleichmäßige Struktur der Gleitschicht erreicht wird. Das globulare Gefüge der Zinn-Kristalle lässt sich dadurch erzielen, dass die Ablagerungsgeschwindigkeit durch Zugabe von großmolekularen Hilfsstoffen, wie insbesondere Gelatine und/oder Resorcin, gesteuert wird, wodurch sich die Zusammensetzung der Gleitschicht und das sich bildende Gefüge in der gewünschten Weise einstellt. Dabei ist die Verwendung von Netzmitteln zweckmäßig, die durch einen C₁₃C₁₅-Oxoalkohol, einen C₁₆C₁₈-Fettalkohol oder einen C₁₈-Oxoalkohol mit einem Ethoxylierungsgrad zwischen 10 und 30 gebildet ist. Ein bevorzugtes Netzmittel ist ein Oxoalkohol mit einem Ethoxylierungsgrad von 20.

Das erfindungsgemäß ausgebildete Gefüge weist eine außerordentlich gleichmäßige Struktur auf, in der sich gleichmäßige und ebenfalls im Wesentlichen globulare antimonreiche Ausscheidungen in gleichmäßiger Verteilung ergeben. Dadurch wird eine wesentlich stabilere Gleitschicht erreicht, die auch in großen Dicken von deutlich 20 µm, insbesondere über 50 µm, stabil, homogen und frei von Delaminierungen verwendbar ist. So können Gleitschichten mit einer Dicke von beispielsweise 500 µm ohne weiteres ausgebildet werden.

Unter "globular" im Zusammenhang mit Gefügen und Kristallisation sind solche Körner zu verstehen, deren Korngröße ein Verhältnis von größter Ausdehnung zu kleinster Ausdehnung von < 3, vorzugsweise < 2, aufweist.

Geeignete Netzmittel sind insbesondere unter der Marke Lutensol von der Firma BASF vertrieben.

Geeignet sind insbesondere die Netzmittel (EO = Ethoxylierungsgrad):

| | |
|---|---|
| Lutensol AO 11 | C₁₃C₁₅-Oxoalkohol mit 11 EO |
| Lutensol AO 30 | C₁₃C₁₅-Oxoalkohol mit 30 EO |
| Lutensol AT 13 | C₁₆C₁₈-Fettalkohol mit 13 EO |
| Lutensol AT 25 | C₁₆C₁₈-Fettalkohol mit 25 EO |
| Lutensol TO 12 | C₁₃-Oxoalkohol mit 12 EO |
| Lutensol TO 20 | C₁₃-Oxoalkohol mit 20 EO |
| Lutensol ON 110 | C₁₃-Oxoalkohol mit 20 EO. |

Als besonders geeignet für die Herstellung der erfindungsgemäßen Gleitlagerschicht und die Vermeidung von Dendritenbildung haben sich die Netzmittel Lutensol ON 110 und TO 20 herausgestellt. Besonders bevorzugt ist Lutensol ON 110, also ein C₁₃-Oxoalkohol mit 20 EO.

In einer bevorzugten Ausführungsform des erfindungsgemäßen Gleitelements beträgt der Kupferanteil in der Gleitschicht zwischen 3 und 6 %. Entgegen der Lehre des Gebrauchsmusters 82 06 353 U1 führt der erhöhte Kupferanteil zu einer Erhöhung der Belastbarkeit und der Dauerfestigkeit der Gleitschicht. Erfindungsgemäß kann daher ein Kupferanteil vorgesehen werden, der nicht nur über dem als vorteilhaft angestrebten Kupfergehalt von < 0,5 Gew.-%, sondern auch oberhalb des überhaupt in der genannten Schrift in Betracht gezogenen Kupfergehalts von maximal 2 % liegt.

Der bevorzugte Antimonanteil in der Gleitschicht liegt zwischen 8 und 17 Gew.-%.

Der bevorzugte Kupferanteil liegt zwischen 2 und 7 %.

Der Anteil der globular geformten Zinn-Kristalle in der Gleitschicht beträgt vorzugsweise mehr als 70 %, weiter bevorzugt mehr als 80 %.

Das erfindungsgemäße Gleitelement kann eine übliche zylindrische Gleitlagerhülse, ein Teilabschnitt einer derartigen Gleitlagerhülse oder auch ein im Wesentlichen ebenes Element sein. Das formgebende Trägerelement besteht aus Metall, und kann in herkömmlicher Weise aus Stahl mit einem aufgebrachten Lagermetall bestehen, das Notschmiereigenschaften aufweist. Auf dieses Stützelement wird die erfindungsgemäße Gleitschicht aufgebracht. Da die erfindungsgemäße Gleitschicht mit einer großen Schichtdicke mit einer hohen Stabilität aufbringbar ist, ist es auch möglich, die Lagermetallschicht fortzulassen und die Gleitschicht unmittelbar auf ein formgebendes Trägerelement aus Metall direkt aufzubringen.

Zur Erläuterung der Erfindung werden die nachstehenden Versuchsergebnisse für Ausführungsbeispiele erläutert:

Es wurde ein Grundelektrolyt (ohne Netzmittel) mit folgender Zusammensetzung hergestellt:

| | |
|---|---|
| Sn²⁺ | 33 bis 35 g/l |
| Sb³⁺ | 2,4 bis 3,0 g/l |
| Cu²⁺ | 0,23 bis 0,26 g/l |
| HBF₄ | 35 bis 45 g/l |
| Resorcin | 3 bis 4 g/l |
| Gelatine | 0,25 g/l |

Das Resorcin und die Gelatine sind Hilfsstoffe, die die Zusammensetzung und die Abscheidungsrate der sich bildenden Schicht beeinflussen. Resorcin beeinflusst im Wesentlichen die Zusammensetzung, während die Großmoleküle der Gelatine die Kristallstruktur, die Rauigkeit und die Schichtzusammensetzung beeinflussen. Hierzu kann die Gelatinekonzentration zweckmäßigerweise zwischen 0,1 und 0,5 g/l eingestellt.

Die elektrolytische Abscheidung wurde mit einem Konstantstrom von 2 A/dm² unter Verwendung von Zinnelektroden bei einer Badtemperatur von 22 bis 24 °C durchgeführt.

Das Stahlsubstrat ist mit einer Nickelschicht (elektrolytisch) vorbeschichtet worden.

Die SnSbCu-Abscheidungen wurden sowohl auf rotierenden Stabelektroden als auch auf Blechstreifen vorgenommen. Die Abscheidung auf rotierenden Stabelektroden vermeidet ein unkontrolliertes Dendritenwachstum, das die Versuchsergebnisse beeinträchtigt hätte.

Alle untersuchten Netzmittel, die oben erwähnt worden sind, führen gegenüber einem Referenz-Standardnetzmittel, wie es bisher üblicherweise benutzt worden ist, zu einem anderen Gefüge bei der Abscheidung. Insbesondere wird das Dendritenwachstum erheblich reduziert.

Im Hinblick hierauf ist die Verwendung der Netzmittel Lutensol ON 110 und Lutensol TO 20 besonders vorteilhaft.

Mit den erwähnten Netzmitteln, insbesondere mit den bevorzugt verwendeten Netzmitteln, wird somit eine Gleitschicht realisiert, die sich hinsichtlich ihres kristallinen Aufbaus von den bisherigen Gleitschichten unterscheidet und erhebliche Handhabungsvorteile bietet. Insbesondere lässt sich die Schicht mit nahezu beliebigen Dicken ausbilden, sodass hierdurch bisher nicht vorhandene Freiheiten bezüglich der Schichtdicken und der Ausbildung der Gleitelemente erreicht werden.

## Patentansprüche

1. Gleitelement mit einer formgebenden Trägerschicht und einer galvanisch darauf angebrachten Gleitschicht, die aus einer Legierung mit den Legierungsbestandteilen Zinn, Antimon und Kupfer gebildet ist, deren Anteile in Gew.-% betragen
Antimon 5 bis 20 %,
Kupfer 0,5 bis 20 %,
Rest Zinn, wobei der Gehalt an Blei < 0,7 % und der Gesamtgehalt sonstiger Anteile < 0,5 % beträgt, **dadurch gekennzeichnet, dass** in der Gleitlagerschicht die Zinn-Kristalle überwiegend globular geformt sind.

2. Gleitelement nach Anspruch 1, **dadurch gekennzeichnet, dass** die Gleitlagerschicht mit einer Dicke > 20 µm aufgetragen ist.

3. Gleitelement nach Anspruch 1 oder 2, **dadurch gekennzeichnet, dass** der Kupferanteil in der Gleitlagerschicht zwischen 3 % und 6 % liegt.

4. Gleitelement nach einem der Ansprüche 1 bis 3, **dadurch gekennzeichnet, dass** der Antimon-Anteil in der Gleitlagerschicht zwischen 8 und 17 % liegt.

5. Gleitelement nach einem der Ansprüche 1 bis 4, **dadurch gekennzeichnet, dass** der Anteil an Kupfer zwischen 0,5 und 7 % liegt.

6. Verfahren zur Herstellung eines Gleitelements durch elektrolytisches Aufbringen einer Gleitschicht aus einer Legierung mit den Legierungsbestandteilen Zinn, Antimon und Kupfer auf eine formgebende Trägerschicht, **gekennzeichnet durch** die Verwendung eines Elektrolyten auf der Basis von Fluoroborsäure und Metallfluoroboraten in wässriger Lösung, der folgende Inhaltsstoffe aufweist:
| | |
|---|---|
| Sn²⁺ | 15 bis 80 g/l |
| Sb³⁺ | 0,5 bis 20 g/l |
| Cu²⁺ | 0,05 bis 10 g/l |
| HBF₄ | 20 bis 200 g/l |
| Netzmittel | 0,05 bis 5 g/l |
sowie etwaige Hilfsstoffe, die nicht in die herzustellende Gleitlagerschicht eingehen, wobei mit einem Hilfsstoff aufgrund seiner Molekülgröße die Wanderungsgeschwindigkeit der Ionen der die Gleitschicht bildenden Elemente so gesteuert wird, dass überwiegend globular geformte Zinn-Kristalle entstehen.

7. Verfahren nach Anspruch 6, **dadurch gekennzeichnet, dass** das Netzmittel ein C₁₃C₁₅-Oxoalkohol, ein C₁₆C₁₈-Fetalkohol oder ein C₁₈-Oxoalkohol mit einem Ethoxylierungsgrad zwischen 10 und 30 ist.

8. Verfahren nach Anspruch 7, **dadurch gekennzeichnet, dass** als Netzmittel ein Oxoalkohol mit einem Ethoxylierungsgrad von 20 verwendet wird.

9. Verfahren nach Anspruch 6 oder 8, **dadurch gekennzeichnet, dass** das Netzmittel mit einer Konzentration von 0,1 bis 3,0 g/l verwendet wird.

10. Verfahren nach einem der Ansprüche 6 bis 9, **dadurch gekennzeichnet, dass** die elektrolytische Abscheiderate auf 0,3 bis 1,5 µm/min eingestellt wird.

## Claims

1. Sliding element with a formative support layer and an electrodeposited sliding layer thereon which is formed from an alloy with the alloy constituents tin, antimony and copper, the fractions of which in % by weight are
antimony 5 to 20%,
copper 0.5 to 20%,
remainder tin, where the content of lead is < 0.7% and the total content of other fractions is < 0.5%, **characterized in that** in the sliding bearing layer, the tin crystals are predominantly globular-shaped.

2. Sliding element according to Claim 1, **characterized in that** the sliding bearing layer is coated with a thickness > 20 µm.

3. Sliding element according to Claim 1 or 2, **characterized in that** the copper fraction in the sliding bearing layer is between 3% and 6%.

4. Sliding element according to one of Claims 1 to 3, **characterized in that** the antimony fraction in the sliding bearing layer is between 8 and 17%.

5. Sliding element according to one of Claims 1 to 4, **characterized in that** the copper fraction is between 0.5 and 7%.

6. Process for producing a sliding element by electrolytically applying a sliding layer of an alloy with the alloy constituents tin, antimony and copper to a formative support layer, **characterized by** the use of an electrolyte based on fluoroboric acid and metal fluoroborates in aqueous solution, which has the following ingredients:
| | |
|---|---|
| Sn²⁺ | 15 to 80 g/l |
| Sb³⁺ | 0.5 to 20 g/l |
| Cu²⁺ | 0.05 to 10 g/l |
| HBF₄ | 20 to 200 g/l |
| wetting agent | 0.05 to 5 g/l |
and also possible auxiliaries which do not pass into the sliding bearing layer to be produced, where, using an auxiliary on the basis of its molecular size, the migration rate of the ions of the elements forming the sliding layer is controlled such that predominantly globular-shaped tin crystals are formed.

7. Process according to Claim 6, **characterized in that** the wetting agent is a C₁₃C₁₅-oxo alcohol, a C₁₆C₁₈-fatty alcohol or a C₁₈-oxo alcohol with a degree of ethoxylation between 10 and 30.

8. Process according to Claim 7, **characterized in that** the wetting agent used is an oxo alcohol with a degree of ethoxylation of 20.

9. Process according to Claim 6 or 8, **characterized in that** the wetting agent is used in a concentration of from 0.1 to 3.0 g/l.

10. Process according to one of Claims 6 to 9, **characterized in that** the electrolytic deposition rate is adjusted to from 0.3 to 1.5 µm/min.

## Revendications

1. Elément coulissant avec une couche de support formante et une couche de glissement déposée par dessus par électrolyse, qui est réalisée en un alliage composé d'étain, d'antimoine et de cuivre, dont les proportions en % de poids sont
en antimoine de 5 à 20%,
en cuivre de 0,5 à 20%,
le reste en étain, dans lequel la teneur en plomb est inférieure à 0,7% et la teneur totale d'autres parties est inférieure à 0,5%, **caractérisé en ce que** les cristaux d'étain dans la couche de glissement sont majoritairement de forme globulaire.

2. Elément coulissant selon la revendication 1, **caractérisé en ce que** la couche de glissement est déposée en une épaisseur supérieure à 20 µm.

3. Elément coulissant selon l'une des revendications 1 ou 2, **caractérisé en ce que** la proportion de cuivre dans la couche de glissement est comprise entre 3% et 6%.

4. Elément coulissant selon l'une des revendications 1 à 3, **caractérisé en ce que** la proportion d'antimoine dans la couche de glissement est comprise entre 8% et 17%.

5. Elément coulissant selon l'une des revendications 1 à 4, **caractérisé en ce que** la proportion de cuivre est comprise entre 0,5% et 7%.

6. Procédé de fabrication d'un élément coulissant par dépôt électrolytique d'une couche de glissement d'un alliage composé d'étain, d'antimoine et de cuivre sur une couche de support formante, **caractérisé par** l'utilisation d'un électrolyte à base d'acide fluoroborique et de fluoroborates métalliques en solution aqueuse, qui présente les composants suivants :
| | |
|---|---|
| Sn²⁺ | de 15 à 80 g/l |
| Sb³⁺ | de 0,5 à 20 g/l |
| Cu²⁺ | de 0,05 à 10 g/l |
| HBF₄ | de 20 à 200 g/l |
| agent mouillant | de 0,05 à 5 g/l |
ainsi que certains agents auxiliaires qui n'entrent pas dans la constitution de la couche de glissement, dans lequel la vitesse de déplacement des ions des éléments constituant la couche de glissement est ajustée avec un agent auxiliaire sur la base de sa taille de molécule, de façon à ce que les cristaux d'étain produits présentent majoritairement une forme globulaire.

7. Procédé selon la revendication 6, **caractérisé en ce que** l'agent mouillant est un C₁₃C₁₅-Oxoalcool, un C₁₆C₁₈-Alcool Gras ou un C₁₈-Oxoalcool avec un degré d'éthoxylation entre 10 et 30.

8. Procédé selon la revendication 7, **caractérisé en ce qu'**il est utilisé comme agent mouillant un Oxoalcool avec un degré d'éthoxylation de 20.

9. Procédé selon l'une des revendications 8 ou 9, **caractérisé en ce que** l'agent mouillant est utilisé avec une concentration de 0,1 à 3,0 g/l.

10. Procédé selon l'une des revendications 6 à 9, **caractérisé en ce que** le taux de précipitation électrolytique est réglé entre 0,3 à 1,5 µg/mn.
